(19) Europäisches Patentamt
European Patent Office
Office européen des brevets

(11) Veröffentlichungsnummer: **0 288 746 B1**

# (12) EUROPÄISCHE PATENTSCHRIFT

(45) Veröffentlichungstag der Patentschrift: **03.07.91**

(51) Int. Cl.5: **B01J 35/06**, B01D 53/36, B01J 35/04

(21) Anmeldenummer: **88104744.3**

(22) Anmeldetag: **24.03.88**

## (54) Plattenförmiger Katalysator zur Entfernung von Stickstoffoxiden aus Abgasen.

(30) Priorität: **29.04.87 DE 3714262**

(43) Veröffentlichungstag der Anmeldung:
**02.11.88 Patentblatt 88/44**

(45) Bekanntmachung des Hinweises auf die Patenterteilung:
**03.07.91 Patentblatt 91/27**

(84) Benannte Vertragsstaaten:
**BE DE FR GB IT NL**

(56) Entgegenhaltungen:
**BE-A- 891 164**
**GB-A- 2 026 336**
**US-A- 3 691 097**

(73) Patentinhaber: **HÜLS AKTIENGESELLSCHAFT**
**Patentabteilung / PB 15 - Postfach 13 20**
**W-4370 Marl 1(DE)**

(72) Erfinder: **Nowitzki, Bernd, Dr.**
**Bitterfelder Strasse 9 a**
**W-4370 Marl(DE)**
Erfinder: **Hög, Hans-Ulrich, Dr.**
**Leverkusener Strasse 8**
**W-4370 Marl(DE)**

EP 0 288 746 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen plattenförmigen Katalysator zur Entfernung von Stickstoffoxiden aus Abgasen in Gegenwart von Ammoniak auf Basis eines Drahtgewebes und einer darauf aufgebrachten katalytisch aktiven Masse, die eine Mischung aus zwischen 400 und 650 °C hitzebeständigen Fasern und zwischen 400 und 650 °C hitzebeständigen Perlen enthält.

Bei der Verbrennung fossiler Energieträger entstehen Stickoxide. Andere Emissionsquellen für Stickoxide sind u. a. chemische Anlagen zur Produktion von Salpetersäure oder von Carbonsäuren unter Verwendung von Salpetersäure als Oxidationsmittel. Stickoxide, insbesondere NO und $NO_2$, sind zum Teil in solchen Mengen in den Abgasen vorhanden, daß sie eine Umweltbelastung darstellen. Deshalb ist es wünschenswert, die Stickoxidemission zu vermindern.

Führt man den Abgasen, in denen der Sauerstoffanteil noch mehr als ca. 1 Vol.-% beträgt, als Reduktionsmittel Ammoniak zu und kontaktiert das Gasgemisch mit einem geeigneten Katalysator, so entstehen in selektiver Reaktion Stickstoff und Wasser:

$$4\ NO + 4\ NH_3 + O_2 \longrightarrow 4\ N_2 + 6\ H_2O$$

$$6\ NO_2 + 8\ NH_3 \longrightarrow 7\ N_2 + 12\ H_2O$$

Es ist bekannt, daß für $SO_2/SO_3$-haltige Abgase, wie sie speziell im Kraftwerksbereich meist vorliegen, gemäß DE-C-24 58 888 ein Katalysator auf Titandioxidbasis mit weiteren metalloxidischen bzw. sulfatischen Komponenten für obiges Verfahren besonders geeignet ist, der vor allem bei Temperaturen zwischen 300 und 450 °C eingesetzt wird.

Die bisher zur Stickoxidminderung überwiegend eingesetzten Katalysatortypen besitzen eine Vielzahl paralleler Kanäle, deren Achsen in Richtung des Gasstromes orientiert sind. Die diesen Katalysatoren zugrundeliegenden Trägerstrukturen sind in den Zeitschriften Maschinenmarkt, Heft 98 (1957), S. 22-26 und Industrie-Anzeiger, Heft 34 (1961), S. 580-586 sowie in DE-B-10 97 344, DE-B-11 92 624 und DE-B-14 76 507 beschrieben. Solche Strukturen werden durch Anordnung einer Vielzahl von Einzelkatalysatoren aus glatten gemäß DE-C-26 36 672, DE-C-35 01 330, DE-B-24 11 378 und DE-C-35 36 309 sowie aus porösen gemäß DE-A-29 26 894 oder aus perforierten Metallplatten gemäß DE-C-28 53 023 und DE-A-32 08 634 gebildet, an welche die katalytisch aktive Substanz gebunden ist. Im weiteren setzt man laut DE-C-27 44 688 Keramik- oder laut DE-C-34 33 197 und DE-A-29 36 927 Fasermatten oder laut DE-C-29 27 246 und DE-C-29 27 253 blanke bzw. laut US-A-4 462 603 und DE-C-23 53 640 vorbehandelte Drahtnetze als Träger ein.

US-A-3 691 097 offenbart, insbesondere gemäß Beispiel 3, einen plattenförmigen Katalysator auf Basis eines Drahtgewebes, auf das eine katalytisch aktive Masse aufgebracht ist, die eine Mischung aus Keramikfasern und Keramikperlen (Aluminiumoxid) enthält.

Außerdem werden sogenannte Wabenkörper gemäß DE-C-25 54 198, die durch Formung plastischer Katalysatormassen mit anschließender Trocknung und Kalzinierung hergestellt werden, als Katalysatoren verwendet.

Neben der obengenannten $SO_2/SO_3$-Belastung von Katalysatoren im Kraftwerksbereich tritt insbesondere im Einsatzbereich vor dem Elektrofilter Abrasion durch hohe Flugstaubanteile im Rauchgasstrom auf. Darüber hinaus neigen hier eingesetzte Katalysatoren mit kleinem Kanalquerschnitt recht schnell zur Verstopfung durch Flugstaub. Folge ist ein höherer Druckverlust, wobei die Wirksamkeit der Katalysatoren aufgrund nicht nutzbarer katalytischer Oberfläche drastisch sinkt. Um diese Nachteile zu beseitigen, werden als Gegenmaßnahme Rußbläser eingesetzt, die es ermöglichen, mit Preßluft oder Hochdruckdampf bei Drücken von ca. 6 bis 13 bar flugstaubbedingte Verstopfungen in den Katalysatorkanälen zu entfernen.

Bei bisher beschriebenen plattenförmigen Katalysatoren wird die Haftung der Katalysatormasse auf dem Träger außer durch Rißbildung in der Oberfläche der Katalysatormasse, hervorgerufen durch von der Gasströmung erzeugte Schwingungen, noch zusätzlich durch das Rußblasen stark beeinträchtigt, so daß die Masse in erheblichem Umfang abgetragen wird.

Der durch Zusammenspiel von Abrasion, Schwingungen sowie Maßnahmen gegen die Verstopfung in den Katalysatorkanälen bedingte Abtrag der Katalysatormasse vom Träger bewirkt einen Rückgang der katalytischen Wirksamkeit. Außerdem führen diese mechanischen Belastungen bei Plattenkatalysatoren dazu, daß das Katalysatormaterial nach einer gewissen Betriebszeit vom Metallträger abfällt.

Der Erfindung liegt daher die Aufgabe zugrunde, bei Plattenkatalysatoren das Haftvermögen der

katalytisch aktiven Masse am metallischen Träger wesentlich zu verbessern, so daß die Katalysatormasse auch unter mechanischen Belastungen nicht zum Abfallen neigt.

Es wurde nun überraschenderweise gefunden, daß ein plattenförmiger Katalysator eine hohe Festigkeit besitzt und die Katalysatormasse hervorragend unter den oben erläuterten mechanischen Belastungen auf dem Drahtgewebe haftet, wenn das Drahtgewebe sand- oder korundgestrahlt und/oder auf das Drahtgewebe geschmolzenes Metall und/oder Metalloxid aufgesprüht ist und die darauf aufgebrachte katalytisch aktive Masse eine Mischung aus hitzebeständigen Fasern und hitzebeständigen Perlen enthält.

Gegenstand der vorliegenden Erfindung ist daher ein plattenförmiger Katalysator zur Entfernung von Stickstoffoxiden aus Abgasen in Gegenwart von Ammoniak auf Basis eines Drahtgewebes und einer darauf aufgebrachten katalytisch aktiven Masse, die eine Mischung aus zwischen 400 und 650 °C hitzebeständigen Fasern und zwischen 400 und 650 °C hitzebeständigen Perlen enthält, der dadurch gekennzeichnet ist, daß das Drahtgewebe sand- oder korundgestrahlt und/oder auf das Drahtgewebe geschmolzenes Metall und/oder Metalloxid aufgesprüht ist.

Als Basismaterial für Katalysatormassen sind z. B. $SiO_2$, $Al_2O_3$, $ZrO_2$, $SnO_2$, $TiO_2$ sowie Zeolithe, tonartige Substanzen oder Mischungen daraus geeignet. Für die Denitrierung von Kraftwerksabgasen wird ein Katalysator auf $TiO_2$-Basis bevorzugt, wobei der Katalysatorgrundsubstanz vorzugsweise die Metalle W, Mo, V, Nb, Fe, Cu und Cr einzeln oder im Gemisch in Form ihrer Oxide oder Sulfate zugesetzt sind. Die Metalle können auch in anderen Formen eingesetzt werden, sofern diese bei der Verarbeitung in die Oxide oder Sulfate übergehen.

Besonders bevorzugt sind Oxide von V und/oder Mo bzw. W. Die Anteile der Zusatzkomponenten im gebrauchsfertigen Katalysator betragen, bezogen auf die Katalysatorgrundsubstanz und berechnet als Oxide, 0 bis 5 Gew.-% $V_2O_5$, 3 bis 14 Gew.-% $MoO_3$ und/oder 4 bis 12 Gew.-% $WO_3$. Höhere Anteile sind zwar ebenfalls anwendbar, bringen jedoch keine entsprechende Verbesserung der Katalysatoreigenschaften.

Diese katalytisch aktiven Massen werden bereitet, indem man z. B. die Ausgangssubstanzen, wie vorzugsweise oberflächenreiches, poröses $TiO_2$ in Anatasform bzw. $TiO_2$-Hydrat (Metatitansäure) mit einem BET-Wert von 50 bis 250 $m^2/g$ und Lösungen von Ammoniumwolframat, -molybdat und -vanadat, miteinander vermischt, geeignete, meist organische Binde-oder Plastifiziermittel (siehe Powdermetall Int., Vol. 18, No. 3 (1986), S. 229-232) hinzusetzt und knetet. Die Herstellung solcher aktiven Massen ist bekannt und wird z. B. in der DE-C-24 58 888 beschrieben. Für die vorliegende Erfindung können grundsätzlich alle dort und an anderen Stellen beschriebenen Methoden zur Herstellung der Katalysatormasse benutzt werden.

Eine so erhaltene plastische Masse wird vorzugsweise in Form einer Schicht auf die Oberfläche des Metallträgers aufgebracht, anschließend getrocknet und im Temperaturbereich zwischen 400 und 650 °C, vorzugsweise zwischen 450 und 550 °C, kalziniert. Die aufgebrachte Masse reicht beidseitig etwa 50 bis 200 µm über den Metallträger hinaus. Die Dicke so hergestellter Platten beträgt vorzugsweise 0,7 bis 1,2 mm. Größere Schichtdicken und Plattenstärken sind zwar ohne weiteres herstellbar, verringern jedoch die Wirtschaftlichkeit des Verfahrens.

Den zuvor beschriebenen, katalytisch aktiven Massen ist eine Mischung aus hitzebeständigen Fasern und hitzebeständigen Perlen zur Verbesserung des Haftvermögens der auf dem Metallträger aufgebrachten Masse beigefügt. Es wird bevorzugt eine Mischung aus Fasern mit einem Durchmesser von 1 bis 20 µm und einer mittleren Faserlänge von 50 bis 4 500 µm und Perlen mit einem mittleren Durchmesser von etwa 25 bis 150 µm eingesetzt.

Eine besondere Ausführungsform des erfindungsgemäßen Katalysators besteht darin, daß die hitzebeständigen Fasern unterschiedlich lang sind, wobei die kurzen Fasern eine Länge von 50 bis 500 µm und einen Durchmesser von 1 bis 5 µm und die langen Fasern eine Länge von 1 000 bis 4 500 µm und einen Durchmesser von 10 bis 20 µm aufweisen.

Das Gewichtsverhältnis von langen zu kurzen Fasern bewegt sich im Rahmen von 1 : 4 bis 9 : 1, vorzugsweise von 1 : 2 bis 9 : 2. Bezogen auf die gesamte aufgebrachte Katalysatormasse nach Calcinierung beträgt der Gehalt an langen und kurzen Fasern 3 bis 16 Gew.-%, vorzugsweise 11 bis 16 Gew.-%, und der an Perlen 0,1 bis 5 Gew.-%, vorzugsweise 1 bis 4 Gew.-%.

Bei der Herstellung des erfindungsgemäßen Katalysators wird zunächst die plastische Katalysatormasse zu einer Folie ausgewalzt, der Metallträger darauf gelegt und durch einen weiteren Walzschritt der Träger in die Katalysatormasse so weit eingedrückt, daß die Unterseite des Trägers mit Katalysatormasse bedeckt ist. Dieser Verarbeitungsschritt bewirkt, daß ein Teil der Katalysatormasse durch die freie Siebfläche des Metallträgers hindurchtritt und die in der Masse enthaltenen Fasern sich in den Löchern wie bei einem Extrusionsschritt senkrecht zur Trägerebene ausrichten. Die nun auf die Oberseite des Metallträgers hindurchgedrungene Masse wird in einem folgenden Walzschritt geglättet. Durch dieses Beschichtungsverfahren wird erreicht, daß der Metallträger beidseitig gleichmäßig beschichtet ist, die obere und untere Katalysatorschicht durch die freie Siebfläche des Trägers hindurch mit sich verbunden ist, durch die

Orientierung der Fasern in sich sowie mit der Oberfläche des Metallträgers verzahnt ist und damit erfindungsgemäß eine optimale Haftung der Katalysatormasse auf dem durchbrochenen Metallträger bewirkt wird. Faser-Perlen-Mischungen gewährleisten andererseits eine optimale Festigkeit des Katalysatorgefüges im Sinne von Abrasionsbeständigkeit und eine gute Flexibilität des erfindungsgemäßen plattenförmigen Katalysators.

Das Aufbringen der Katalysatormasse kann auch durch Tauchung des Metallträgers in eine Aufschlämmung der Katalysatormasse erfolgen. Hierbei ist fast ausschließlich eine Faservorzugsorientierung parallel zum Metallträger zu beobachten. So hergestellte Produkte weisen hinsichtlich des Haftvermögens der Katalysatormasse auf dem Metallträger eine geringere Qualität auf.

Die in der Katalysatormasse enthaltenen Fasern und Perlen können aus jedem beliebigen Material bestehen, das entsprechend der jeweils gewählten Calcinierungstemperatur zwischen 400 und 650 °C hitzebeständig ist. Solche Materialien sind z. B. Aramid, Glas und Keramik. Bevorzugt werden Fasern und Perlen aus Glas und/oder Keramik eingesetzt. Bei Verwendung von Glas sind wiederum solche Sorten bevorzugt, die auch dem Angriff der sauren Komponenten im Rauchgas standhalten, z. B. S-Glas oder E-Glas.

Als durchbrochene metallische Träger können unter anderem gelochte Metallplatten, Streckmetallbleche oder Netzwerke aus Metalldraht verwendet werden, wobei aus den folgenden beiden Gründen Drahtgewebe bevorzugt sind:

- Es sind Gewebe mit sehr geringer Drahtstärke herstellbar, wodurch die Möglichkeit besteht, Katalysatorplatten sehr geringer Dicke und relativ geringen Gewichts herzustellen. Damit lassen sich Anordnungen mit hohem freiem Querschnitt, verbunden mit geringem Druckverlust, schaffen.
- Drahtgewebe ist leicht zu verarbeiten, z. B. hinsichtlich unterschiedlicher Verformungsschritte im Herstellungsprozeß.

Abb. 1 im Anhang zeigt Aufsicht und Seitenansicht eines Drahtgewebes.

Es werden gewobene Metallnetze wie in Abb. 1 aus Aluminium, einem Kohlenstoffstahl oder vorzugsweise rostfreiem Edelstahl, der einem Einsatz unter Hochtemperatur-Rauchgasatmosphäre, typischerweise zwischen 320 und 430 °C, längerfristig standhält, eingesetzt.

Die Maschenweite w des Drahtgewebes ist von Drahtkante zu Drahtkante gemessen. Vorzugsweise beträgt die relative freie Siebfläche etwa 60 % der Gesamtfläche des Metallnetzes. Die Drahtdicke d des Draht-gewebes liegt zwischen 0,1 und 0,7 mm, vorzugsweise zwischen 0,2 und 0,5 mm bei einer Maschenweite zwischen 0,5 und 1,4 mm, so daß ein Verhältnis von Maschenweite zu Drahtdicke zwischen 5 und 2 : 1 eingehalten wird. Hierdurch erreicht man einerseits eine optimal stützende und haftungsgebende Wirkung des Metallnetzes für die Katalysatormasse sowie dessen gute Verarbeitbarkeit z. B. bei der Formgebung durch Walzen und andererseits eine möglichst dünne Plattenstärke verbunden mit einem geringen Endgewicht des plattenförmigen Katalysators.

Erfindungsgemäß wird ein hervorragendes Haftvermögen der Katalysatormasse am Drahtgewebe dadurch erreicht, daß man dasselbe sand-oder korundstrahlt und/oder auf das Drahtgewebe geschmolzenes Metall und/oder Metalloxid aufsprüht. Hierdurch wird das Metallnetz in sich verfestigt und die Oberfläche aufgerauht.

Des weiteren ist Gegenstand der vorliegenden Erfindung daher ein Verfahren zur Herstellung eines plattenförmigen Katalysators auf Basis eines Drahtgewebes durch Aufbringen einer katalytisch aktiven Masse, die eine Mischung aus zwischen 400 und 650 °C hitzebeständigen Fasern und zwischen 400 und 650 °C hitzebeständigen Perlen enthält, das dadurch gekennzeichnet ist, daß man das Drahtgewebe sand- oder korundstrahlt und/oder auf das Drahtgewebe geschmolzenes Metall und/oder Metalloxid aufsprüht.

Für das Sand- oder Korundstrahlen werden z. B. Partikel in der Größe zwischen 50 und 200 $\mu$m verwandt. Anschließend bringt man auf das so vorbehandelte Drahtgewebe die katalytisch aktive Masse, die eine Mischung aus hitzebeständigen Fasern und hitzebeständigen Perlen enthält, auf.

Eine innere Verfestigung des Drahtgewebes in Diagonalrichtung ist schon nach dem Sand- oder Korundstrahlen festzustellen, d. h. die relativ große Beweglichkeit der miteinander verwobenen Metalldrähte gegeneinander ist verringert worden. Das zusätzliche Flammspritzen des Drahtgewebes wird in der Weise durchgeführt, daß die Metall- und /oder Metalloxidpartikel mit Hilfe von Heißgas, z. 8. in einer Acetylen/Sauerstoffflamme, oder elektrisch, z. B. im Lichtbogenverfahren, geschmolzen oder zum Erweichen erhitzt, auf die vorzugsweise schon sand- oder korundgestrahlte Metalloberfläche aufgesprüht werden, wobei man die Teilchen darauf aufwachsen läßt.

Als Vorbehandlung des Metallnetzes vor dem Aufsprühen von Metall- und /oder Metalloxidpartikeln kann die Metalloberfläche auch an Stelle des Sand- oder Korundstrahlens nur entfettet oder gebeizt werden.

Bei einer Ausführungsform des Flammspritzens wird Aluminiumdraht durch Kontakt mit einer Hochtemperaturflamme erhitzt, geschmolzenes Metall in Form feinster Partikel zusammen mit z. B. Preßluft durch

Düsen auf die Drahtgewebeoberfläche aufgesprüht, wobei die Aluminium-Partikel abkühlen, fest werden und miteinander unter Einbeziehung der Metallträgeroberfläche fest aneinander haften. So aufgebrachtes Material bewirkt, daß die zuvor noch relativ große Beweglichkeit der miteinander verwobenen Metalldrähte gegeneinander fast vollständig aufgehoben und auf diese Weise die angestrebte Verfestigung des Metallnetzes erreicht wird. Für das auf die Metallträgeroberfläche aufzusprühende Metall und/oder Metalloxid können auch z. B. rostfreier Edelstahl oder Titan-, Aluminium- und Molybdän-Phasen oder Oxide der Elemente Ti, Zr, Si und Al eingesetzt werden.

Die durch das Sprühverfahren auf das Drahtgewebe aufgebrachte Schicht ist vorzugsweise zwischen 0,03 und 0,15 mm stark. So hergestellte Metallnetze aus Draht sind bei späterer Weiterverarbeitung noch leicht formbar und besitzen den Vorteil, daß sie nach einem Verformungsschritt bei beliebiger Orientierung des Drahtgewebes, d. h. in oder gegen die Webrichtung, ihre Struktur beibehalten. Außerdem gewinnen sie durch die Verformung zusätzlich an Steifheit unter Erhaltung ihrer Schichtstärke und Gewebeform. Die Formgebung erfindungsgemäßer plattenförmiger Katalysatoren erfolgt vorzugsweise durch einen Walzschritt mittels Profilwalzen quer zur Längsrichtung einer Drahtgewebebahn.

Abb. 2 zeigt eine schematische Querschnittsansicht eines plattenförmigen Katalysators, bei dem der Metallträger (1) durch Sand- oder Korundstrahlen aufgerauht ist.

Abb. 3 zeigt eine schematische Querschnittsansicht eines plattenförmigen Katalysators, bei dem auf das Metallnetz (1) geschmolzenes Metall und/oder Metalloxid (2) aufgesprüht ist.

Außerdem sind in den Abbildungen 2 und 3 die in der Katalysatormasse (3) enthaltenen langen (4) und kurzen (5) hitzebeständigen Fasern und hitzebeständigen Perlen (6) dargestellt. An den Kreuzungsstellen (7) der miteinander verwobenen Metalldrähte ist die relativ große Beweglichkeit derselben gegeneinander durch Sand- oder Korundstrahlen (siehe Abb. 2) und/oder durch Aufsprühen von geschmolzenem Metall und/oder Metalloxid auf die Drahtoberfläche (siehe Abb. 3) erheblich verringert, d. h. das Drahtgewebe ist in sich verfestigt worden.

Mögliche räumliche Anordnungen der Katalysatorplatten im Reaktor sind in den Abb. 4-1 bis 4-4 dargestellt.

Abb. 4-1 zeigt die einfachste Packungsform von glatten, auf Distanz angeordneten Platten.

In den Abb. 4-2 bis 4-4 sind gebräuchliche Packungsformen für die Anordnung und Stapelung von geformten Platten zu mechanisch stabilen und kompakten Einheiten dargestellt, wie sie auch im Fall der vorliegenden Erfindung für den Einsatz geeignet sind.

Die Erfindung wird durch die folgenden Beispiele erläutert:

Die Qualität der plattenförmigen Katalysatoren gemäß der Beispiele 1 bis 6 wird in den nachfolgend beschriebenen Testverfahren überprüft:

1 Anströmtest:

Die Kante eines plattenförmigen Katalysators wird aus geringem Abstand (1 bis 2 cm) mit Preßluft (6 bar) aus unterschiedlichen Winkeln angeblasen. Nach 10 Minuten beurteilt man den Grad der Ablösung der Katalysatormasse vom Träger, und zwar als prozentualer Anteil der abgelösten Katalysatormasse, bezogen auf die insgesamt auf den Träger aufgebrachte Masse.

2. Dornbiegetest:

Zur Untersuchung der Flexibilität wird die Katalysatorplatte über einen Dorn gebogen. Hierbei wird der Biegewinkel festgestellt, bei dem erstens noch keine Rißbildung und zweitens noch keine Ablösung der Katalysatormasse vom Träger auftritt.

3. Schütteltest:

Der Schütteltest, bei dem ein plattenförmiger Katalysator in einen Kasten mit rauhen Wandungen gestellt wird und über 16 h durch ständige Bewegung (3,3 Hz, ca. 30 mm Amplitude) an diesen Wandungen reibt, simuliert das Erosionsverhalten. Es wird wie in Test 1 der Grad der Ablösung der Katalysatormasse vom Träger beurteilt.

4. Falltest:

Darüber hinaus wird das Haftvermögen der Katalysatormasse auf dem Metallträger in Zusammenhang mit der inneren Festigkeit des Drahtgewebes durch einen Falltest mit einer Keramik-Kugel von 20 mm

Durchmesser aus 1 m Höhe auf die Stirnkante eines plattenförmigen Katalysators getestet. Es wird wie im Test 1 der Grad der Ablösung der Katalysatormasse vom Träger beurteilt. Die Ablösung der Katalysatormasse sollte sich auch nach 10maliger Durchführung auf den Deformierungsbereich beschränken. Bei besonders hochwertigen Prüfkörpern zeigt die Katalysatormasse zwar Risse im Deformierungsbereich, haftet aber trotz Deformation des Metallträgers weiter auf diesem.

5. Thermischer Schocktest:

Die Plattenkatalysatoren werden einer mehrfachen thermischen Schockbehandlung durch Aufheizen auf Betriebstemperatur, gefolgt von rascher Abkühlung auf Raumtemperatur, ausgesetzt. Dabei beträgt die Aufheiz- und Abkühlrate 450 °C/h. Es wird wie im Test 1 der Grad der Ablösung der Katalysatormasse vom Träger beurteilt.

6. Aktivitätstest:

Die Testung der katalytischen Wirksamkeit erfolgt in einem Durchflußreaktor mit rechteckigem Querschnitt. Es werden jeweils drei Katalysatorplatten gleicher Art mit 28 mm Kantenbreite und 300 mm Kantenlänge bei Plattenabständen zwischen 6 und 7 mm getestet, wobei man den Stickoxid-Umsatz in Abhängigkeit von der Testgastemperatur bestimmt. Die Testgasmenge beträgt ca. 1 $Nm^3/h$.

Tabelle 1 gibt die Zusammensetzung des synthetischen Testgases wieder:

Tabelle 1: Zusammensetzung des Testgases

| Testgaskomponenten | Anteil (Vol.-%) |
|---|---|
| $N_2$ | 89,7 |
| $O_2$ | 5,0 |
| $H_2O$-Dampf | 5,0 |
| NO | 0,1 |
| $NH_3$ | 0,1 |
| $SO_2$ | 0,1 |

Die Werte für den Umsatz wurden nach der folgenden Definition berechnet:

Umsatz U

$$U = \frac{\text{umgesetzte Mole}}{\text{eingesetzte Mole}} \cdot 100 \left[\frac{\text{mol} \cdot \%}{\text{mol}}\right]$$

Beispiel 1

Ein 300 mm langes und 100 mm breites Drahtgewebe mit einer lichten Maschenweite von 1 mm und

einer Drahtdicke von 0,28 mm aus rostfreiem Edelstahl (Werkstoff-Nr. 1.4301) wurde durch Korundstrahlen vorbehandelt und durch Aufsprühen von geschmolzenem Aluminium innig verfestigt. Nach dem Flammspritzen betrug die lichte Maschenweite ca. 0,8 mm.

Die Katalysatormasse bereitete man folgendermaßen zu: 100 Teile poröses, pulverförmiges Titandioxid in Anatasform mit einem BET-Wert von 100 bis 150 $m^2/g$ wurden mit 9,5 Teilen E-Glasfasern mit einer Länge von 3 mm und einem Durchmesser von 14 µm, 6,8 Teilen Aluminiumsilikatfasern mit einer Länge von 50 bis 500 µm und einem Durchmesser von 1 bis 5 µm und 5,4 Teilen E-Glasperlen mit einem Durchmesser von 50 bis 125 µm unter Zugabe von Polyvinylalkohol sowie einer wäßrigen Ammoniumwolframatlösung zu einer plastischen Masse verknetet.

Nun wird der Metallträger gemäß dem auf Seite 5 beschriebenen Verfahren durch Kalandrieren mit der plastischen Masse beschichtet, 12 h bei 100 °C getrocknet und über 8 h bei 500 °C calciniert.

Die fertige Katalysatorplatte ist 1,0 mm dick und enthält 10 Gew.-% $WO_3$, bezogen auf die calcinierte Katalysatormasse.

Beispiel 2

Ein 300 mm langes und 100 mm breites Drahtgewebe mit einer lichten Maschenweite von 1,25 mm und einer Drahtdicke von 0,5 mm aus rostfreiem Edelstahl (Werkstoff-Nr. 1.4301) wurde ebenfalls durch Korundstrahlen vorbehandelt, aber nicht durch Flammspritzen. Zur Herstellung der plastischen Katalysatormasse wurden 100 Teile Titandioxid gemäß Beispiel 1, 9,5 Teile E-Glasfasern mit einer Länge von 3 mm und einem Durchmesser von 14 µm, 9,5 Teile Aluminiumsilikatfasern mit einer Länge von 50 bis 500 µm und einem Durchmesser von 1 bis 5 µm und 2,7 Teile E-Glasperlen mit einem Durchmesser von 50 bis 125 µm unter Zugabe einer wäßrigen Ammoniumwolframat- und -molybdat-Lösung miteinander verknetet. Das Beschichten des Metallnetzes mit der plastischen Masse sowie das Trocknen und Calcinieren der Katalysatorplatte erfolgte gemäß Beispiel 1.

Die Stärke der fertigen Platte betrug 1,3 mm und der Gehalt an $WO_3$ und $MoO_3$ jeweils 5 Gew.-%, bezogen auf die calcinierte Katalysatormasse.

Beispiel 3

Ein 300 mm langes und 100 mm breites Drahtgewebe mit einer lichten Maschenweite von 0,8 mm und einer Drahtdicke von 0,32 mm aus rostfreiem Edelstahl (Werkstoff-Nr. 1.4301) wurde wie in Beispiel 2 nur korundgestrahlt.

Die Zubereitung der plastischen Katalysatormasse erfolgte wiederum durch Verkneten der im folgenden aufgeführten Komponenten unter Zugabe einer wäßrigen Ammoniummolybdatlösung:

Auf 100 Teile Titandioxid gemäß Beispiel 1 wurden 7,9 Teile E-Glasfasern mit einer Länge von 3 mm und einem Durchmesser von 14 µm, 5,3 Teile Aluminiumsilikatfasern mit einer Länge von 50 bis 500 µm und einem Durchmesser von 1 bis 5 µm und 4,0 Teile E-Glasperlen mit einem Durchmesser von 50 bis 125 µm, eingesetzt.

Das Beschichten des Metallnetzes mit der plastischen Masse sowie das Trocknen und Calcinieren der Katalysatorplatte wurde wie in Beispiel 1 durchgeführt. Der Gehalt an $MoO_3$ betrug 10,8 Gew.-%. Nach dem Abkühlen tauchte man die calcinierte Katalysatorplatte, die eine Stärke von etwa 0,9 mm aufwies, für 10 Minuten in eine dem Porenvolumen des Katalysators entsprechend eingestellte Vanadyloxalatlösung ein und trocknete anschließend 2 Stunden lang bei 150 °C. Der so auf den Katalysator aufgezogene Vanadiumanteil betrug 0,8 Gew.-% $V_2O_5$, bezogen auf die calcinierte Katalysatormasse.

Beispiel 4 (Vergleichsversuch)

Es wurde ein plattenförmiger Katalysator mit einer Plattenstärke von 1,4 mm gemäß der Verfahrensbeschreibung der DE-C-28 53 023 mit einer Katalysatormasse auf Basis $TiO_2$ mit 12,7 Gew.-% Molybdän- und 0,8 Gew.-% Vanadinoxid als katalytisch aktive Komponenten und einem Glasfaseranteil von 10 Gew.-%, bezogen auf die Katalysatormasse, hergestellt. Der Durchmesser der eingesetzten Glasfasern betrug 14 µm und die Länge 3 mm.

Als Träger wurde ein Streckmetallblech aus Edelstahl (Werkstoff-Nr. 1.4301) mit einer Maschenlänge von 6 mm, einer Maschenbreite von 3 mm, einer Stegbreite von 0,5 mm und einer Stegdicke von 0,3 mm verwendet, das durch Aufsprühen von geschmolzenem Aluminium aufgerauht war.

Beispiel 5 (Vergleichsversuch)

Es wurde ein plattenförmiger Katalysator einer Plattenstärke von 0,8 mm mit einem nicht vorbehandelten Metallnetz aus Edelstahl (Werkstoff-Nr. 1.4301) als Träger und einer Katalysatormasse auf Basis $TiO_2/SiO_2$ gemäß Beispiel 1 der DE-C-29 27 253 hergestellt. Hierbei betrug die Länge des Metallnetzes 300 mm und die Breite 100 mm.

Die gemäß den Beispielen 1 bis 5 hergestellten plattenförmigen Katalysatoren wurden den oben angeführten Qualitätstests 1 bis 5 unterzogen.

Das Haftvermögen der faserfreien Katalysatormasse auf blankem Drahtgewebe gemäß der Lehre der DE-C-29 27 253 (Beispiel 5) ist erheblich schlechter als das der erfindungsgemäßen Katalysatormassen mit Faser-Perlen-Anteilen (Beispiele 1 bis 3). Eine Verbesserung des Haftvermögens der Katalysatormasse mit Faseranteilen von 10 Gew.-% gemäß der DE-C-28 53 023 (Beispiel 4) ist festzustellen. Jedoch werden gute Ergebnisse erst mit Katalysatormassen der erfindungsgemäßen plattenförmigen Katalysatoren der Beispiele 1 bis 3 erzielt.

Die Ergebnisse des Aktivitätstests sind in Tabelle 2 aufgelistet:

Tabelle 2: Ergebnisse des Aktivitätstests

| Katalysator gemaß | NO-Umsatz [%] | | |
| --- | --- | --- | --- |
| | 350 °C | 400 °C | 450 °C |
| Beispiel 1: | 75 | 83 | 86 |
| Beispiel 2: | 76 | 84 | 87 |
| Beispiel 3: | 92 | 94 | 94 |
| Beispiel 4: | 90 | 93 | 94 |
| Beispiel 5: | 74 | 79 | 80 |

Hinsichtlich der katalytischen Eigenschaften sind die Katalysatoren gemaß DE-PS 29 27 253 und DE-PS 28 53 023 (Beispiele 4 und 5) den erfindungsgemaßen Katalysatoren der Beispiele 1 bis 3 vergleichbar. Alle weisen eine gute Denitrierwirkung auf.

**Ansprüche**

1. Plattenförmiger Katalysator zur Entfernung von Stickstoffoxiden aus Abgasen in Gegenwart von Ammoniak auf Basis eines Drahtgewebes und einer darauf aufgebrachten katalytisch aktiven Masse, die eine Mischung aus zwischen 400 und 650 °C hitzebeständigen Fasern und zwischen 400 und 650 °C hitzebeständigen Perlen enthält,
   dadurch gekennzeichnet,
   daß das Drahtgewebe sand- oder korundgestrahlt und/oder auf das Drahtgewebe geschmolzenes Metall und/oder Metalloxid aufgesprüht ist.

2. Plattenförmiger Katalysator nach Anspruch 1,
   dadurch gekennzeichnet,
   daß die Drahtdicke zwischen 0,1 und 0,7 mm liegt und ein Verhältnis von Maschenweite zu Drahtdicke zwischen 5 und 2 : 1 eingehalten wird.

3. Plattenförmiger Katalysator nach den Ansprüchen 1 bis 2,

dadurch gekennzeichnet,
daß die in der katalytisch aktiven Masse enthaltene Mischung aus hitzebeständigen Fasern mit einem Durchmesser von 1 bis 20 μm und einer Länge von 50 bis 4 500 μm und aus hitzebeständigen Perlen mit einem mittleren Durchmesser von 25 bis 150 μm besteht.

**4.** Plattenförmiger Katalysator nach den Ansprüchen 1 bis 3,
dadurch gekennzeichnet,
daß die hitzebeständigen Fasern unterschiedlich lang sind, wobei die kurzen Fasern eine Länge von 50 bis 500 μm und einen Durchmesser von 1 bis 5 μm und die langen Fasern eine Länge von 1 000 bis 4 500 μm und einen Durchmesser von 10 bis 20 μm aufweisen.

**5.** Plattenförmiger Katalysator nach den Ansprüchen 1 bis 4,
dadurch gekennzeichnet,
daß das Gewichtsverhältnis von den langen zu kurzen hitzebeständigen Fasern 1 : 4 bis 9 : 1 beträgt.

**6.** Plattenförmiger Katalysator nach den Ansprüchen 1 bis 5,
dadurch gekennzeichnet,
daß der Gehalt an den hitzebeständigen Fasern, bezogen auf die aufgebrachte Katalysatormasse nach Calcinierung 3 bis 16 Gew.-% und der an den hitzebeständigen Perlen 0,1 bis 5 Gew.-% beträgt.

**7.** Plattenförmiger Katalysator nach den Ansprüchen 1 bis 6,
dadurch gekennzeichnet,
daß die hitzebeständigen Fasern und hitzebeständigen Perlen aus Glas und/oder einem Keramikmaterial bestehen.

**8.** Verfahren zur Herstellung eines plattenförmigen Katalysators auf Basis eines Drahtgewebes durch Aufbringen einer katalytisch aktiven Masse, die eine Mischung aus zwischen 400 und 650 °C hitzebeständigen Fasern und zwischen 400 und 650 °C hitzebeständigen Perlen enthält,
dadurch gekennzeichnet,
daß man das Drahtgewebe sand- oder korundstrahlt und/oder auf das Drahtgewebe geschmolzenes Metall und/oder Metalloxid aufsprüht.

**Claims**

**1.** A plate-shaped catalyst for the removal of nitrogen oxides from waste gases in the presence of ammonia, on the basis of a wire fabric and a catalytically active body applied thereto which contains a mixture of fibres heat-resistant between 400 and 650 °C and beads heat-resistant between 400 and 650 °C, characterized in that the wire fabric is sand or corundum blasted and/or molten metal and/or metal oxide is sprayed on to the wire fabric.

**2.** A plate-shaped catalyst according to claim 1, characterized in that the wire thickness is between 0.1 and 0.7 mm and a ratio of between 5 and 2 : 1 is maintained between the mesh width and the wire thickness.

**3.** A plate-shaped catalyst according to claims 1 and 2, characterized in that the mixture contained in the catalytically active body consists of heat-resistant fibres having a diameter of 1 to 20 μm and a length of 50 to 4500 μm and heat-resistant beads having a mean diameter of 25 to 150 μm.

**4.** A plate-shaped catalyst according to claims 1 to 3, characterized in that the heat-resistant fibres are of different lengths, the short fibres having a length of 50 to 500 μm and a diameter of 1 to 5 μm, the long fibres having a length of 1000 to 4500 μm and a diameter of 10 to 20 μm.

**5.** A plate-shaped catalyst according to claims 1 to 4, characterized in that the weight ratio between the long and short heat-resistant fibres is 1 : 4 to 9 : 1.

**6.** A plate-shaped catalyst according to claims 1 to 5, characterized in that the content of heat-resistant fibres, referred to the catalyst body applied, is after calcination 3 to 16% by weight and the content of the heat-resistant beads is 0.1 to 5% by weight.

7. A plate-shaped catalyst according to claims 1 to 6, characterized in that the heat-resistant fibres and heat-resistant beads are made of glass and/or a ceramic material.

8. A process for the production of a plate-shaped catalyst on the basis of a wire fabric by the application of a catalytically active body containing a mixture of fibres heat-resistant between 400 and 650 °C and beads heat-resistant between 400 and 650 °C, characterized in that the the wire fabric is sand or corundum blasted and/or molten metal and/or metal oxide is sprayed on to the wire fabric.

**Revendications**

1. Catalyseur sous forme de plaques pour éliminer les oxydes d'azote des gaz d'échappement en présence de gaz ammoniac à base d'un treillage métallique et d'une masse active catalytique déposée par-dessus, qui contient un mélange de fibres résistant à des températures entre 400 et 650 °C et des perles résistant à des températures entre 400 et 650 °C, caractérisé en ce que le treillage métallique est sablé ou soumis à un jet de corindon et/ou sur le treillage métallique est pulvérisé du métal et/ou de l'oxyde métallique fondu.

2. Catalyseur sous forme de plaques selon la revendication 1, caractérisé en ce que l'épaisseur du fil est comprise entre 0,1 et 0,7 mm et le rapport de la largeur de maille à l'épaisseur du fil est compris entre 5 et 2:1.

3. Catalyseur sous forme de plaques selon les revendications 1 et 2, caractérisé en ce que le mélange contenu dans la masse active catalytique est constitué de fibres résistant à des températures élevées dont le diamètre est compris entre 1 et 20 $\mu$m et la longueur entre 50 et 4500 $\mu$m et de perles résistant à des températures élevées avec un diamètre moyen de 25 à 150 $\mu$m.

4. Catalyseur sous forme de plaque selon les revendications 1 à 3, caractérisé en ce que les fibres résistant à des températures élevées sont de longueur variable, les fibres courtes ayant une longueur de 50 à 500 $\mu$m et un diamètre de 1 à 5 $\mu$m et les fibres longues une longueur de 1000 à 4500 $\mu$m et un diamètre de 10 à 20 $\mu$m.

5. Catalyseur sous forme de plaques selon les revendications 1 à 4, caractérisé en ce que le rapport de poids entre les fibres résistant à des températures élevées longues et les courtes s'élève de 1:4 à 9:1.

6. Catalyseur sous forme de plaques selon les revendications 1 à 5 caractérisé, en ce que la teneur en fibres résistant à des températures élevées, rapportée à la masse de catalyseur obtenue après calcination s'élève de 3 à 16 % en poids et celle des perles résistant à des températures élevées de 0,1 à 5% en poids.

7. Catalyseur sous forme de plaques selon les revendications 1 à 6, caractérisé en ce que les fibres résistant à des températures élevées et les perles résistant à des températures élevées sont constituées de verre et/ou d'un matériau céramique.

8. Procédé de fabrication d'un catalyseur en plaques sur base d'un treillage métallique par application d'une masse active catalytique, qui contient un mélange de fibres résistant à des températures élevées entre 400 et 650 °C et de perles résistant à des températures élevées entre 400 et 650 °C, caractérisé en ce que le treillage métallique est sablé ou soumis à un jet de corindon et/ou sur le treillage métallique est pulvérisé du métal et/ou de l'oxyde métallique fondu.

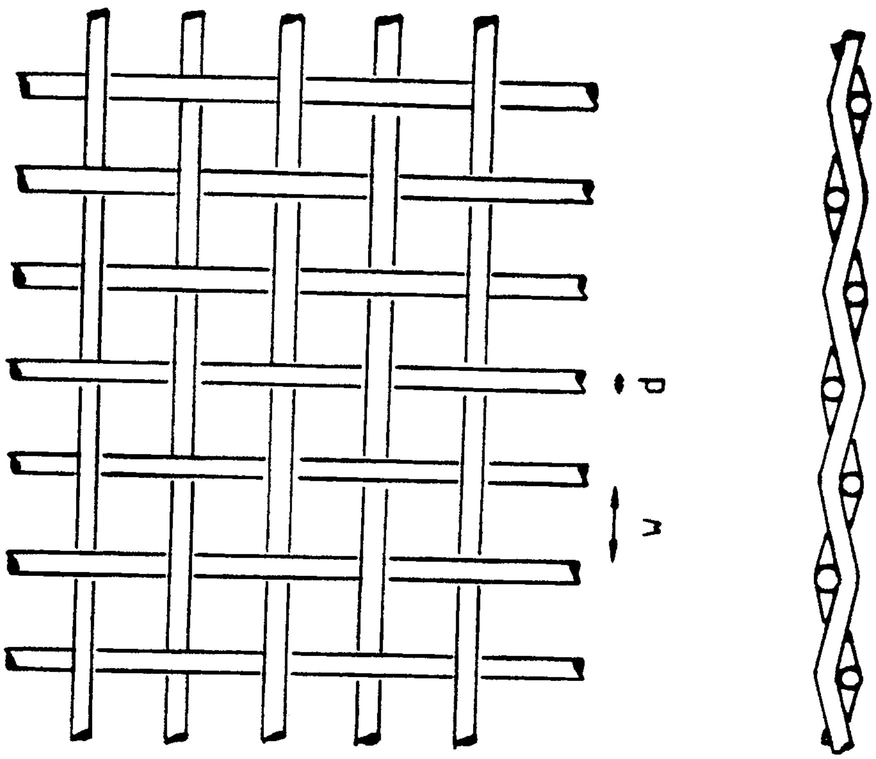


Abb. 1

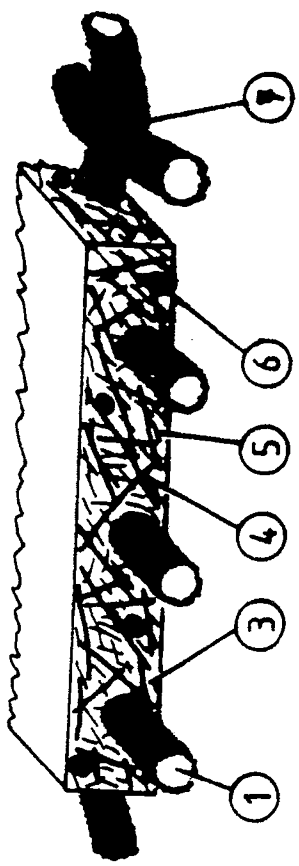


Abb. 2

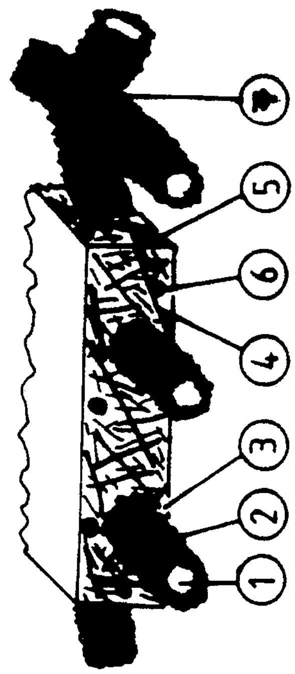


Abb. 3

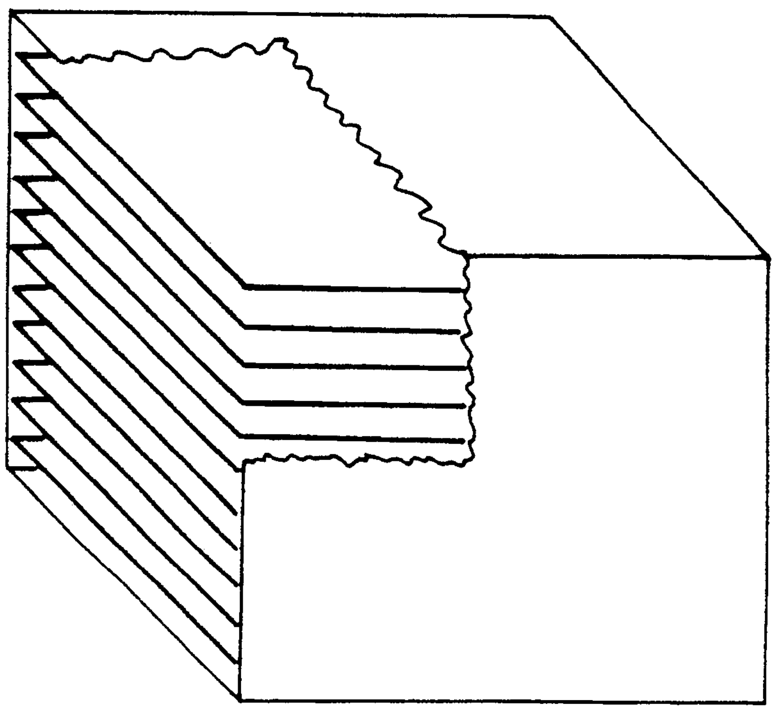

Abb. 4-1

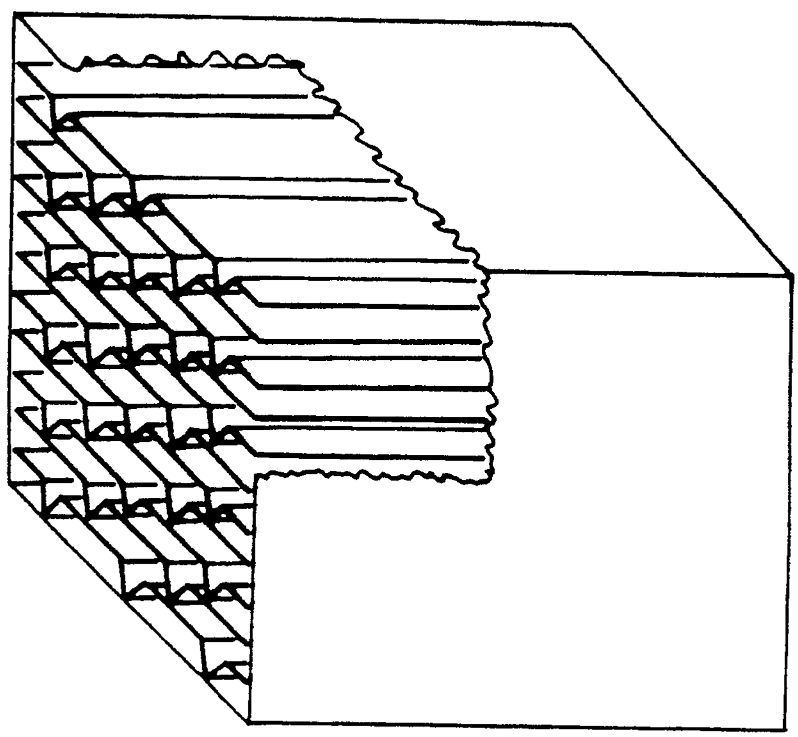

Abb. 4-2

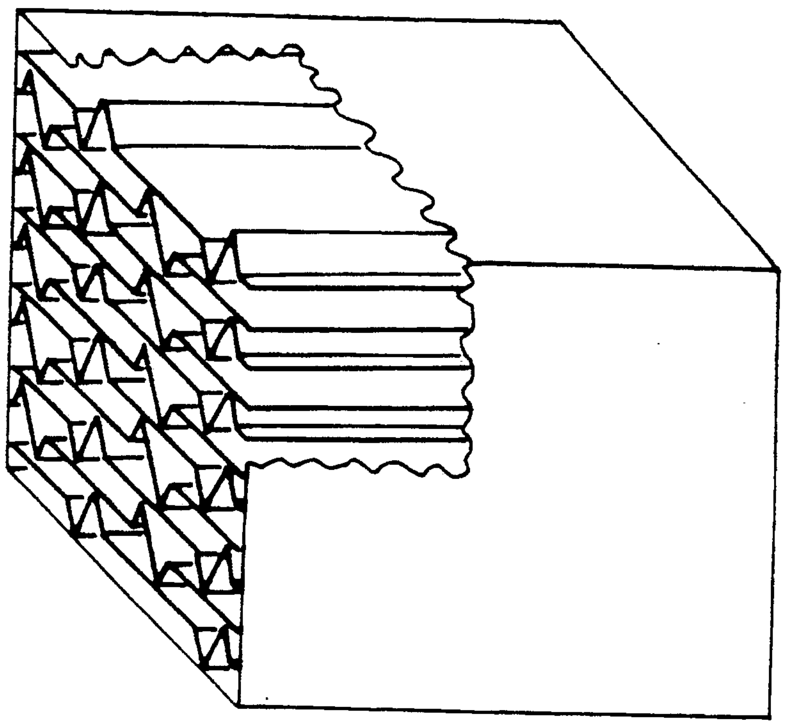

Abb. 4-3

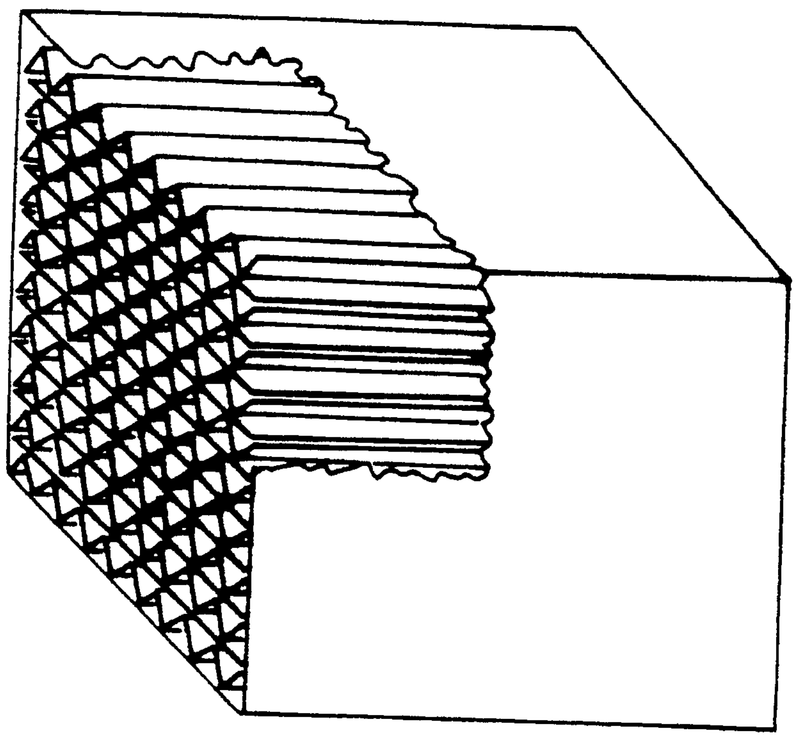

Abb. 4-4